# EUROPÄISCHE PATENTANMELDUNG

(11) **EP 1 601 022 A1**
(43) Veröffentlichungstag der Anmeldung: **30.11.2005**
(21) Anmeldenummer: 04012743.3
(22) Anmeldetag: 28.05.2004
(51) Int. Cl.: H01L 31/042, H01L 31/045, F24J 2/54

(54) **Solaranlage**

(71) Anmelder: Hilber Technic Cooperation GmbH, 6150 Steinach am Brenner (AT); Hilber, Franz, 6152 Trins Nr. 200 (AT)
(72) Erfinder: Hilber, Franz, 6152 Trins Nr.200 (AT)
(74) Vertreter: Hofinger, Stephan

(57) **Zusammenfassung**

Solaranlage, insbesondere photovoltaische Solaranlage, mit einem Traggerüst (1) und mindestens zwei darauf angeordneten Paneelen (2), die vorzugsweise mit Solarzellen (11) versehen sind, wobei mindestens zwei Paneele (2) relativ zueinander verschwenkbar sind.

## Beschreibung

Die vorliegende Erfindung betrifft eine Solaranlage, insbesondere photovoltaische Solaranlage, mit einem Traggerüst und mindestens zwei darauf angeordneten Paneelen, die vorzugsweise mit Solarzellen versehen sind.

Solaranlagen sind in vielerlei Ausführungsformen bekannt. Speziell bei großen Anlagen stellt sich dabei das Problem, dass diese in einer Vielzahl von Einzelteilen an den Aufstellungsort geliefert werden und dort bei hohem Zeitaufwand montiert werden müssen. Da Kraftwerke mit einer Vielzahl von Solaranlagen häufig im Sinne einer geringen Umweltbeeinträchtigung in abgeschiedenen Gegenden aufgestellt werden, sind lange Montagezeiten vor Ort unerwünscht. Darüber hinaus kann in Werkshallen wesentlich effizienter gearbeitet werden. Allerdings besteht derzeit das Problem, dass große vormontierte Solaranlagen nur mit hohem Aufwand - wenn überhaupt - transportierbar sind.

Aufgabe der vorliegenden Erfindung ist es daher, eine Solaranlage zu schaffen, die in einer Werkshalle weitgehend betriebsfertig vormontiert werden kann und dennoch leicht zu transportieren ist.

Dies wird erfindungsgemäß dadurch erreicht, dass mindestens zwei Paneele relativ zueinander verschwenkbar sind.

Durch die Verschwenkbarkeit der Paneele zueinander können die Pack- und Transportabmessungen der Solaranlage extrem verringert werden. Die Dimensionierung der Paneele wird dabei vorzugsweise an übliche Hohlmaße von LKWs und Güterwagons angepasst.

Bei der vorzugsweise vorgesehenen Verbindung der Paneele über Gelenke, insbesondere Scharniergelenke, ist die relative Lage der Paneele zueinander eindeutig definiert. Die Montagearbeit vor Ort beschränkt sich auf ein Ausklappen der eingeklappten Paneele sowie eine daran anschließende Verschraubung an den dazu vorgesehenen Verbindungsplatten.

Besonders kompakte Pack- und Transportabmessungen ergeben sich, wenn die Paneele um einen Winkel von 90° zueinander verschwenkbar sind.

Ingesamt bilden die Paneele zusammen mit dem Traggerüst vorzugsweise einen sogenannten "Solarmover", der dem Sonnenstand nachführbar ist. Dazu sind die Paneele im ausgeklappten Zustand gemeinsam sowohl um eine vertikale Achse verdrehbar, wie auch im Neigungswinkel verstellbar.

Die Paneele weisen in üblicher Weise eine Vielzahl von Solarzellen auf, die zwischen einer vorderen Glasplatte und einer hinteren Tedlarfolie mittels dazwischen liegender Schmelzfolien eingebettet sind. In einer bevorzugten Ausführungsform ist dabei vorgesehen, dass die Tedlarfolie mittels eines Klebers mit einem Rahmen verklebt ist. Die Verklebung ist einerseits produktionstechnisch günstig und erlaubt andererseits eine schwächere und damit leichtere Dimensionierung des vorzugsweise aus feuerverzinktem Stahl bestehenden Rahmens, der durch die Verklebung besser stabilisiert wird, als dies bei einer Verschraubung der Fall wäre.

Als Kleber haben sich insbesondere Kleber auf Basis eines silanmodifizierten Polymers bewährt.

Die Verklebung erlaubt darüber hinaus eine Paneelfläche von über 3 m², insbesondere über 5 m².

Weitere Merkmale und Einzelheiten der vorliegenden Erfindung ergeben sich aus der nachfolgenden Figurenbeschreibung. Dabei zeigt:
- Fig. 1: die erfindungsgemäße Solaranlage in Seitenansicht bei eingeklappten Paneelen,
- Fig. 2: eine korrespondierende weitere Seitenansicht um 90° verdreht,
- Fig. 3: eine Seitenansicht gemäß Fig. 1 in ausgeklapptem Zustand und bei horizontaler Gesamtfläche,
- Fig. 4: eine Ansicht gemäß Fig. 3 mit maximalem Neigungswinkel der Gesamtfläche und
- Fig. 5: einen Querschnitt durch die Klebeverbindung zwischen Rahmen und eingebetteten Solarzellen.

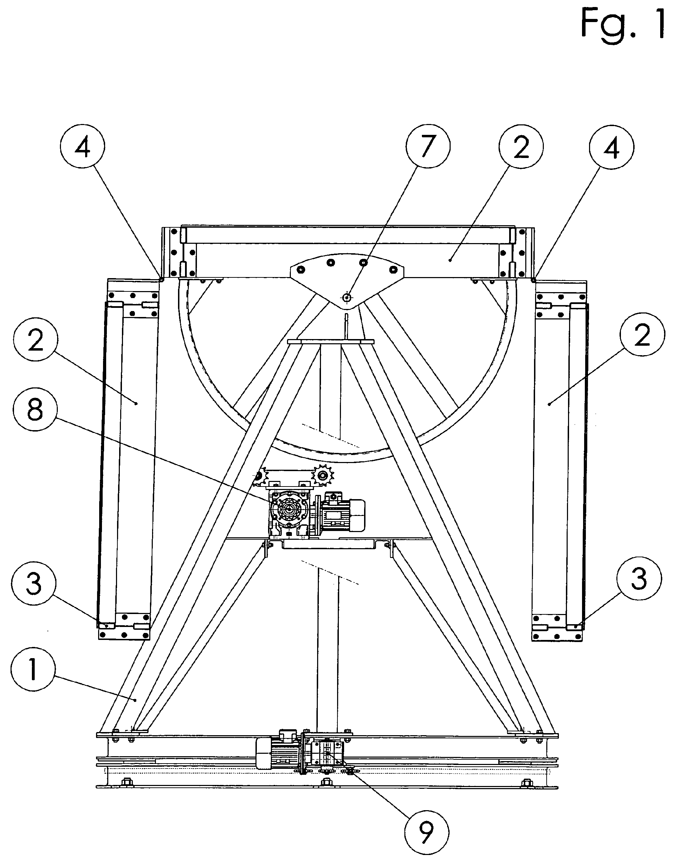

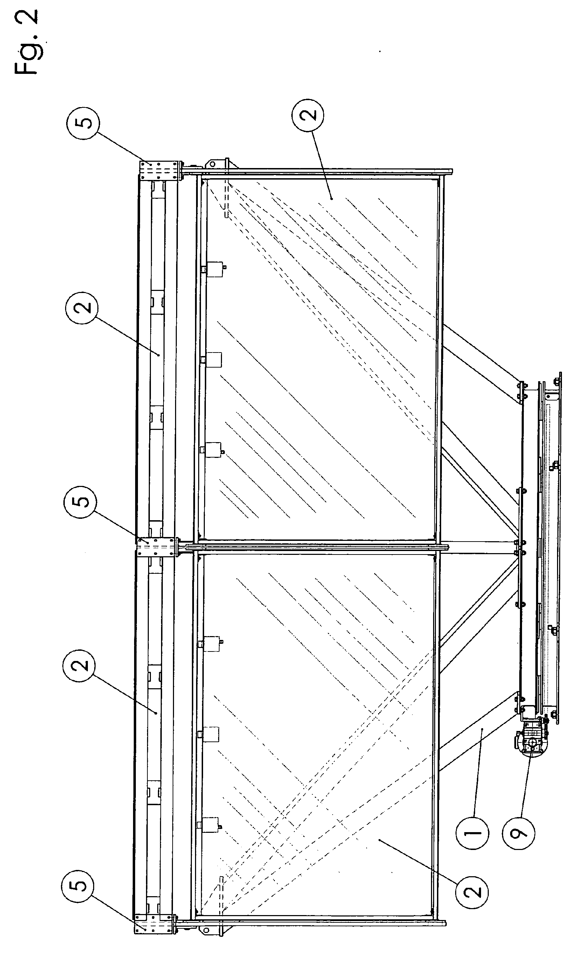

Wie aus den Fig. 1 und 2 ersichtlich, wird die erfindungsgemäße Solaranlage von einem Traggerüst 1 getragen. Dieses Traggerüst 1 weist einen Basisring auf, über den das Traggerüst 1 mittels eines Drehantriebs 9 um eine vertikale Achse drehbar ist.

Das Traggerüst 1 trägt an seinem oberen Ende direkt die beiden mittleren Paneele 2. Die Paneele 2 sind plattenförmig und werden vielfach auch als Solarmodule bezeichnet. Ein Schwenkantrieb 8 erlaubt dabei ein Verschwenken um eine Schwenkachse 7.

Wesentlich ist, dass die weiteren Paneele 2 über Scharniergelenke 4 mit den mittleren Paneelen 2 verbunden sind. Dies erlaubt ein kompaktes Einklappen in die Pack- und Transportposition, wie sie in den Fig. 1 und 2 gezeigt ist.

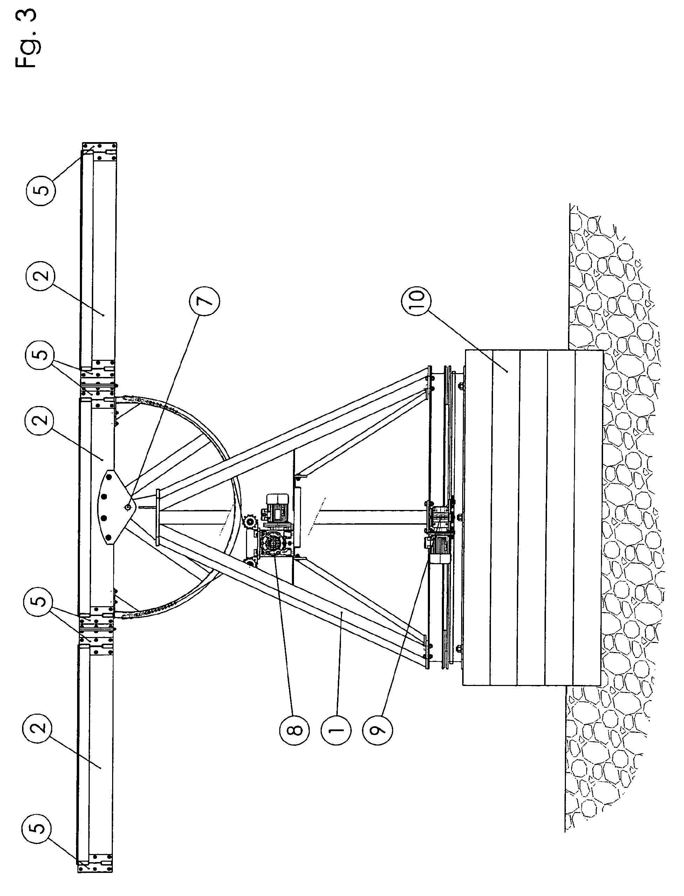

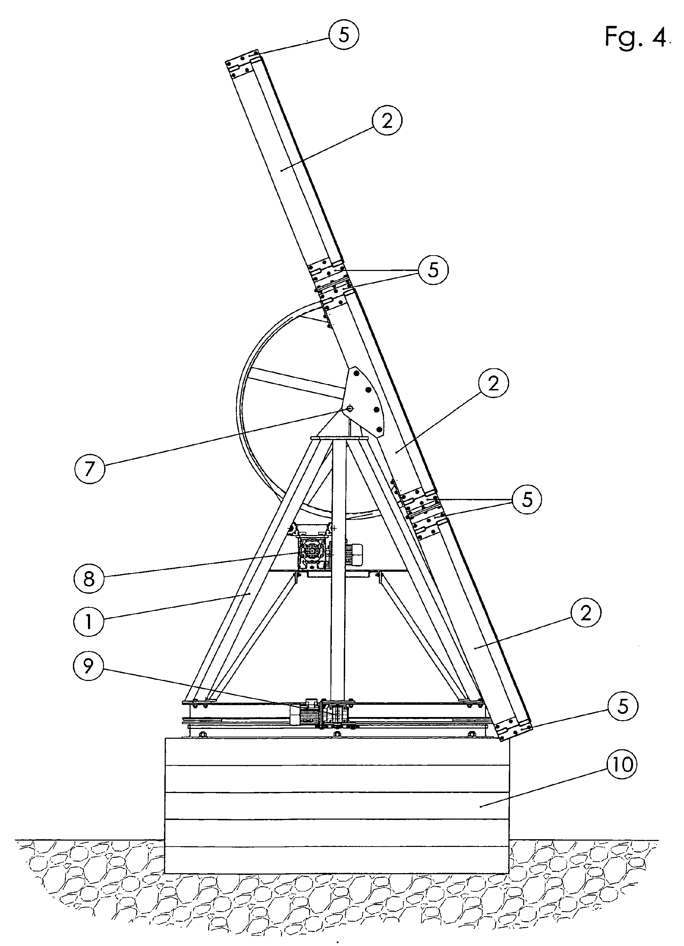

Im Gegensatz dazu ist die erfindungsgemäße Solaranlage in den Fig. 3 und 4 im ausgeklappten Zustand dargestellt. Vor Ort werden die äußeren Paneele 2 hochgeklappt und an den Verbindungsplatten 5 mit den mittleren Paneelen 2 verschraubt. Die Paneele 2 bilden dann eine einheitliche Fläche, die um die Schwenkachse 7 insgesamt verschwenkt werden kann, wie dies aus Fig. 4 zu entnehmen ist.

Aufgestellt wird die Solaranlage vorzugsweise auf einem Betonsockel 10.

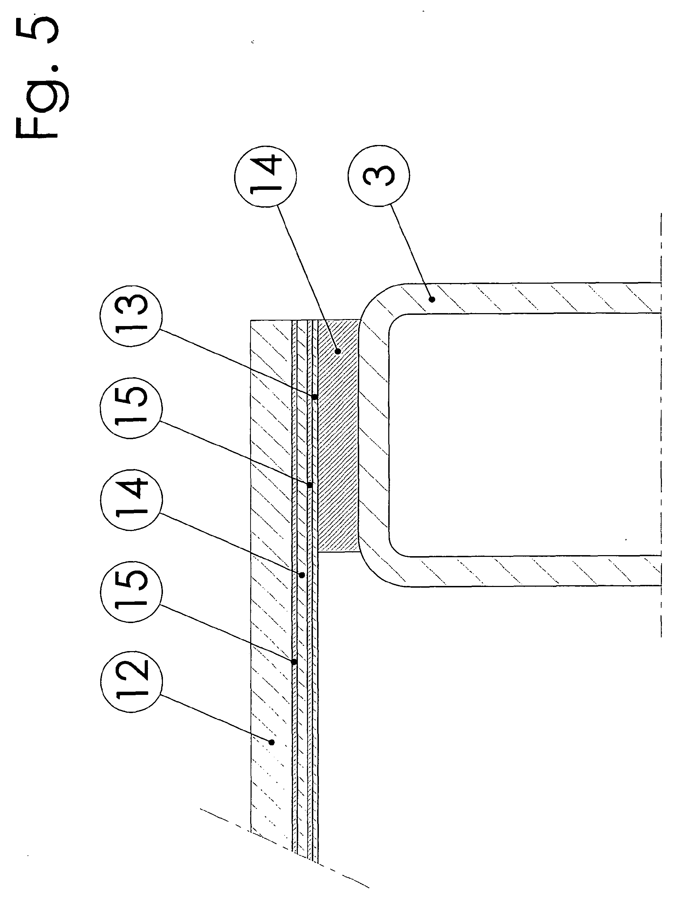

Näher eingegangen werden soll noch auf den Aufbau der einzelnen Paneele 2. Diese weisen mindestens einen umlaufenden Rahmen 3 auf, der aus feuerverzinktem Stahl besteht. Wie aus Fig. 5 ersichtlich, sind die einzelnen Solarzellen 11 eingebettet zwischen eine vordere Glasplatte 12 und eine hintere Tedlarfolie 13, wobei die Verbindung in üblicher Weise mittels Schmelzfolien 15 erfolgt. Neuartig ist dabei die Verbindung zum Rahmen 3, für die ein Kleber 14 auf Basis eines silanmodifizierten Polymers verwendet wird. Die Verklebung erlaubt eine Ausbildung der einzelnen Paneele 2 mit Flächen über 3 m², insbesondere über 5 m².

Die Nachführung der Solaranlage an einen Sonnenstand kann entweder über Sensoren erfolgen oder auch vorprogrammiert in Abhängigkeit der geographischen Länge und Breite des Standortes.

## Patentansprüche

1. Solaranlage, insbesondere photovoltaische Solaranlage, mit einem Traggerüst (1) und mindestens zwei darauf angeordneten Paneelen (2), die vorzugsweise mit Solarzellen (11) versehen sind, **dadurch gekennzeichnet, dass** mindestens zwei Paneele (2) relativ zueinander verschwenkbar sind.

2. Solaranlage nach Anspruch 1, **dadurch gekennzeichnet, dass** mindestens zwei Paneele (2) gelenkig, insbesondere mittels Scharniergelenken (4), miteinander verbunden sind.

3. Solaranlage nach Anspruch 1 oder 2, **dadurch gekennzeichnet, dass** die Paneele (2) um einen Winkel von 90° zueinander verschwenkbar sind.

4. Solaranlage nach einem der Ansprüche 1 bis 3, **dadurch gekennzeichnet, dass** die Paneele (2) im ausgeklappten Zustand gemeinsam dem Sonnenstand nachführbar sind.

5. Solaranlage nach Anspruch 4, **dadurch gekennzeichnet, dass** die Paneele (2) im ausgeklappten Zustand gemeinsam sowohl um eine vertikale Achse verdrehbar, wie auch im Neigungswinkel verstellbar sind.

6. Solaranlage nach einem der Ansprüche 1 bis 5, **dadurch gekennzeichnet, dass** die Paneele (2) eine Vielzahl von Solarzellen (11) aufweisen, die zwischen einer vorderen Glasplatte (12) und einer hinteren Tedlarfolie (13) eingebettet sind, wobei die Tedlarfolie (13) mittels eines Klebers (14) mit einem Rahmen (3) verklebt ist.

7. Solaranlage nach Anspruch 6, **dadurch gekennzeichnet, dass** der Kleber (14) ein silanmodifiziertes Polymer als Basis aufweist.

8. Solaranlage nach Anspruch 6, **dadurch gekennzeichnet, dass** der Rahmen (3) aus Stahl ist.

9. Solaranlage nach Anspruch 8, **dadurch gekennzeichnet, dass** der Rahmen (3) aus verzinktem, insbesondere feuerverzinktem Stahl ist.

10. Solaranlage nach einem der Ansprüche 1 bis 9, **dadurch gekennzeichnet, dass** die Paneele (2) jeweils eine Fläche über 3 m², insbesondere über 5 m² aufweisen.
